# EUROPEAN PATENT APPLICATION

(11) **EP 4 772 408 A1**
(43) Date of publication of application: **08.07.2026**
(21) Application number: 24857930.2
(22) Date of filing: 07.06.2024
(51) Int. Cl.: B60R 21/23, B60R 21/231, B60R 21/2334, B60R 21/2346, B60R 21/239

(54) **AIRBAG**

(30) Priority: 30.08.2023 CN 202322352240 U
(71) Applicant: Autoliv Development AB, 44783 Vargarda (SE)
(72) Inventor: DING, Hui, Shanghai 201807 (CN); LI, Siqian, Shanghai 201807 (CN); MENG, Qiang, Shanghai 201807 (CN)
(74) Representative: Feucker, Max Martin
(86) International application number: PCT/CN2024/097936
(87) International publication number: WO 2025/044385

(57) **Abstract**

A safety airbag (1). The safety airbag (1) is configured to be mounted at the roof of a vehicle, and includes: an airbag (10), having a deployed state and a stowed state; and a gas generator, configured to inflate the airbag (10) to cause the airbag (10) to expand into the deployed state. The airbag (10) includes a top panel (111), and the top panel (111) is positioned at the roof of the vehicle in the deployed state. The airbag (10) further includes a tether (13) located on an inner side of the airbag (10), the tether (13) and the top panel (111) being abutted against each other. The top panel (111) is provided with a first pressure relief port (113), and the tether (13) is provided with a second pressure relief port (121). The first pressure relief port (113) and the second pressure relief port (121) are aligned with each other in a first time period during a deployment process of the airbag (10), and the first pressure relief port (113) and the second pressure relief port (121) are staggered with each other via a telescopic portion (111A) provided on the top panel (111) in a second time period during the deployment process of the airbag (10), wherein the second time period is later than the first time period.

## Description

### TECHNICAL FIELD

The present invention relates to a safety apparatus in a vehicle, and in particular, to a safety airbag.

### BACKGROUND ART

In vehicles, safety airbags are widely used as safety apparatuses to protect occupants. Existing automotive safety airbags include, for example, a safety airbag arranged in a steering wheel, a safety airbag arranged in a dashboard, and a roof-mounted safety airbag arranged at the roof of a vehicle in order to make more efficient use of the limited space inside the vehicle. When the vehicle is collided with or impacted, a gas generator of the roof-mounted safety airbag receives a signal transmitted by means of a wire harness connected to the gas generator, thereby bringing about a burst. Then, gas generated by the burning propellant quickly inflates a stowed airbag of the roof-mounted safety airbag, and the inflated airbag expands and then extends from the roof of the vehicle to a predetermined position in front of an occupant, thereby protecting the occupant from injury brought about by a collision.

At an initial stage in a deployment process of the airbag, if the deployment speed of the airbag is too fast, a violent impact may be exerted on components (such as a windshield and a dashboard) in the vehicle. Therefore, it is desirable that the airbag can be deployed at a low initial speed.

### SUMMARY OF THE INVENTION

An object of the present invention is to provide a safety airbag that can be deployed at a low initial deployment speed.

The present invention provides a safety airbag, configured to be mounted at the roof of a vehicle, comprising:
an airbag, having a deployed state and a stowed state; and
a gas generator, configured to inflate the airbag to cause the airbag to expand into the deployed state;
wherein
the airbag comprises a top panel positioned on the roof of the vehicle in the deployed state, and the airbag further comprises a tether located on an inner side of the airbag, the tether and the top panel being abutted against each other,
the top panel is provided with a first pressure relief port, the tether is provided with a second pressure relief port, the first pressure relief port and the second pressure relief port are aligned with each other in a first time period during a deployment process of the airbag, and the first pressure relief port and the second pressure relief port are staggered with each other via a telescopic portion provided on the top panel in a second time period during the deployment process of the airbag, wherein the second time period is later than the first time period.

According to an embodiment of the present invention, the telescopic portion is configured to be a foldable portion, and the foldable portion is formed by folding one section of the top panel, and extends into a flat section as the airbag is gradually deployed.

According to an embodiment of the present invention, the foldable portion is provided at an end portion of the top panel, and one end of the tether is fixed to a first end of the foldable portion. As the airbag is gradually deployed, the first end of the foldable portion moves to increase the length of the top panel, and pulls the tether to move toward the end portion of the top panel along with the first end until the first pressure relief port and the second pressure relief port are staggered.

According to an embodiment of the present invention, the airbag comprises a first chamber and a second chamber in fluid communication with each other. In the deployed state of the airbag, the first chamber is deployed along the roof of the vehicle, and the second chamber is positioned at the dashboard of the vehicle. The gas generator is provided at the first chamber.

According to an embodiment of the present invention, the safety airbag further comprises a closing portion provided on an inner side surface of a partial section of the top panel and spaced apart from the first pressure relief port by a predetermined distance, wherein when the second pressure relief port and the first pressure relief port are staggered, the closing portion covers the second pressure relief port.

According to an embodiment of the present invention, the foldable portion is formed by folding one section of the top panel into a multi-layer structure, and the foldable portion comprises a fixing member for fixing the folded structure thereof.

According to an embodiment of the present invention, the foldable portion is formed by folding one section of the top panel into a three-layer structure.

According to an embodiment of the present invention, the fixing member is configured to be a stitch.

According to an embodiment of the present invention, the tether comprises a wide end and a narrow end, and the first pressure relief port is provided at a position of the top panel closer to the wide end of the tether. When the second pressure relief port and the first pressure relief port are staggered, the wide end of the tether covers the first pressure relief port.

According to an embodiment of the present invention, the first pressure relief port and/or the second pressure relief port is configured to be a hole or a slot.

### BRIEF DESCRIPTION OF THE DRAWINGS

The features, advantages, and technical effects of exemplary embodiments of the present invention will be described below with reference to the accompanying drawings. In the accompanying drawings, the same reference numbers denote the same elements, wherein
FIGS. 1(a) and 1(b) each show a safety airbag according to an embodiment of the present invention in a first time period during a deployment process.
FIGS. 2(a) and 2(b) each show the safety airbag according to an embodiment of the present invention in a second time period during the deployment process.

### DETAILED DESCRIPTION OF PREFERRED EMBODIMENTS

Specific embodiments of the safety airbag according to the present invention will be described below with reference to the accompanying drawings. The following detailed description and the accompanying drawings are used to exemplarily explain the principles of the present invention. The present invention is not limited to the described preferred embodiments, and various embodiments described in the present invention can be used individually or in any combination. The scope of protection of the present invention is defined by the claims.

In addition, terms for spatial relations (such as "upper", "lower", "left", "right", etc.) are used to describe a relative positional relationship between an element and another element shown in the accompanying drawings. Therefore, the terms for spatial relations may be applied to directions different from the directions shown in the accompanying drawings during use. Obviously, although all of these terms for spatial relations refer to the directions shown in the accompanying drawings for ease of explanation, a person skilled in the art will appreciate that directions different from the directions shown in the drawings may be used.

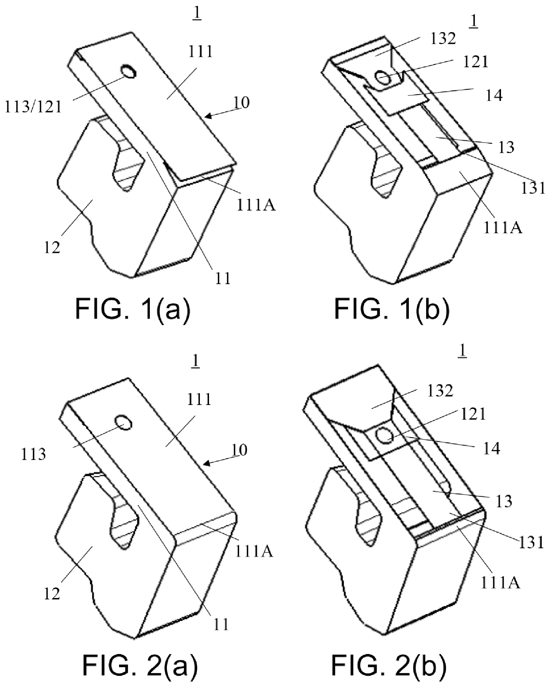

FIGS. 1(a) and 1(b) each show a safety airbag according to an embodiment of the present invention in a first time period during a deployment process. FIGS. 2(a) and 2(b) each show the safety airbag according to an embodiment of the present invention in a second time period during the deployment process. The safety airbag according to the embodiments of the present invention will described below with reference to FIGS. 1(a), 1(b), 2(a), and 2(b).

As shown in FIGS. 1(a), 1(b), 2(a), and 2(b), the safety airbag 1 according to the present invention includes an airbag 10, and the airbag 10 has a deployed state and a stowed state. The safety airbag 1 further includes a gas generator (not shown), and the gas generator is configured to inflate the airbag 10 to cause the airbag 10 to expand into the deployed state. In order to clearly show the structure of the airbag 10, the airbag 10 shown in the figures is in the deployed state, and when the airbag 10 is in the stowed state, the airbag 10 will be stowed at a predetermined position on the roof of a vehicle. The structure of the airbag 10 will be described in detail below.

As shown in the figures, in the embodiments of the present invention, the airbag 10 includes a first chamber 11 and a second chamber 12 in fluid communication with each other. When the airbag 10 is in the deployed state, the first chamber 11 will be deployed along the roof of the vehicle. For the airbag 10 in the orientation shown in the figures, the right end of the first chamber 11 is closer to the windshield of the vehicle than the left end. When the airbag 10 is in the deployed state, the second chamber 12 will be positioned at the dashboard of the vehicle, and, for the airbag 10 in the orientation shown in the figures, the right end of the second chamber 12 will be positioned at the dashboard of the vehicle to stably support the entire airbag 10. The left end of the second chamber 12 will be configured to restrain the head of an occupant, and furthermore, a lower convex portion of a lower end of the second chamber 12 will be configured to restrain the chest of the occupant to protect the occupant from injury in the event of a collision, for example. As one example, the gas generator may be provided at the first chamber 11 (e.g., the left end of the chamber 11).

As shown in FIGS. 1(a) and 2(a), the airbag 10 includes a top panel 111, and the top panel 111 is used as a panel of the first chamber 11 and configured to define an inner space of the first chamber 11. In the deployed state, the top panel 111 is to be positioned at the roof of the vehicle and extends substantially tightly against the vehicle roof.

In addition, as shown in FIGS. 1(b) and 2(b), the airbag 10 further includes a tether 13 located on an inner side thereof. In order to show the internal structure of the airbag 10, a part of the top panel 111 of the airbag 10 is removed in FIGS. 1(b) and 2(b), to clearly show the tether 13 and the connection and fixing manner thereof. The tether 13 is arranged to abut against the top panel 111. The top panel 111 is provided with a first pressure relief port 113, the tether 13 is provided with a second pressure relief port 121, and the first pressure relief port 113 and the second pressure relief port 121 can be aligned with each other in an initial stage of the deployment process of the airbag 10, so that gas inside the airbag 10 is discharged through the first pressure relief port 113 and the second pressure relief port 121. Thus, the gas inside the airbag 10 does not increase too quickly, and the pressure inside the airbag 10 does not increase too quickly, so that a violent force applied by the airbag 10 to components (e.g., the windshield and the dashboard) in the vehicle at the initial stage of the deployment process can be reduced, thereby reducing the possibility of the components in the vehicle being damaged by the airbag 10. The above deployment process of the airbag will be described in detail below.

FIGS. 1(a) and 1(b) schematically show the airbag at the initial stage in the deployment process (e.g., the first 10 ms of the deployment process). For convenience of description, the initial stage of the airbag is defined as a first time period during the deployment process of the airbag, and during the first time period, the first pressure relief port 113 and the second pressure relief port 121 are aligned with each other, as shown in FIGS. 1(a) and 1(b). Moreover, during a second time period (for example, a time period of the first 10 ms of the deployment process has elapsed) during the deployment process of the airbag, the first pressure relief port 113 and the second pressure relief port 121 are staggered with each other, as shown in FIGS. 2(a) and 2(b), and the second time period is later than the first time period. That is, in the second time period and subsequent time periods of the airbag deployment, the gas in the airbag will be unable to be discharged through the first pressure relief port 113 and the second pressure relief port 121. Thus, the gas in the airbag 10 will increase quickly, so that the airbag 10 can quickly enter the fully deployed state to protect occupants.

In the present invention, in order to achieve the conversion of the first pressure relief port 113 and the second pressure relief port 121 from the relative positions aligned with each other to the relative positions staggered with each other, a telescopic portion 111A is provided on the top panel 111. As one example, the telescopic portion 111A is configured to be a foldable portion, and the foldable portion is formed by folding one section of the top panel 111, and extends into a flat section as the airbag is gradually deployed. In the airbag 10 shown in the figures, the foldable portion is formed by folding a section of the right end portion of the top panel 111, and therefore, the foldable portion will be hidden inside the airbag 10, specifically the first chamber 11, as shown in FIGS. 1(a) and 1(b). Moreover, as the airbag 10 is gradually deployed, a first end of the foldable portion hidden inside the first chamber 11 (i.e., the left end portion of the foldable portion in FIG. 1(b)) moves from the position thereof inside the airbag 10 to the position thereof outside the airbag 10 until the first end returns to a position aligned with the rest of the top panel 111 to increase the length of the top panel 111, as shown in FIGS. 2(a) and 2(b). As an embodiment of the present invention, the foldable portion may be formed by folding a section of the top panel into a multi-layer structure, for example, a three-layer structure. Moreover, a fixing member for fixing the folded structure, for example, a stitch, may be further provided on the foldable portion to maintain the folded structure of the foldable portion, and when subjected to a sufficient force, the fixing member is broken, so that the foldable portion is deployed into a flat section.

As shown in FIGS. 1(b) and 2(b), one end of the tether 13 is fixed to the first end of the foldable portion (i.e., the left end portion of the foldable portion in FIG. 1(b)), and when the first end of the foldable portion moves from the position thereof inside the airbag 10 to the position thereof outside the airbag 10, the foldable portion will pull the tether 13 to move toward the right end of the top panel 111 along with the first end of the foldable portion, as shown in FIG. 2(b), until the first pressure relief port 112 and the second pressure relief port 121 are staggered.

Advantageously, the tether 13 includes a wide end 132 and a narrow end 131, the first pressure relief port 113 of the top panel 111 is provided at a position of the top panel 111 closer to the wide end 132 of the tether 13, and when the second pressure relief port 121 and the first pressure relief port 113 are staggered, the wide end 132 of the tether 13 may cover the first pressure relief port 113. It can be understood that, as shown in FIG. 2(b), the wide end 132 of the tether 13 has a size sufficient to completely cover the first pressure relief port 121 from an inner side of the top panel 111, which will cut off the flow of the gas inside the airbag 10 to the outside through the first pressure relief port 113.

According to an embodiment of the present invention, the airbag 10 further includes a closing portion 14, which is provided on an inner side surface of a partial section of the top panel 111, for example, fixed on the inner side surface of the top panel 111 via a stitch, and the closing portion 14 is provided to be spaced apart from the first pressure relief port 113 by a predetermined distance. When the second pressure relief port 121 and the first pressure relief port 113 are staggered, the closing portion 14 may cover the second pressure relief port 121. It can be understood that, as shown in FIG. 2(b), the closing portion 14 has a size sufficient to completely cover the second pressure relief port 121 on an upper side of the tether 13, which will cut off the flow of the gas inside the airbag 10 to the outside through the second pressure relief port 121.

As an example, as shown in FIG. 2(b), the edge of the closing portion 14 close to the wide end 132 of the tether 13 is complementary to the edge of the wide end 132 in shape, so as to cut off a fluid communication path between the first pressure relief port 113 and the second pressure relief port 121. Specifically, the right edge of the wide end 131 of the tether 13 is trapezoidal, the left edge of the closing portion 14 is inverted trapezoidal, and the trapezoidal shape is complementary to the inverted trapezoidal shape, thereby forming a complete gapless intermediate member between the first pressure relief port 113 and the second pressure relief port 121, so as to cut off the fluid communication path therebetween.

According to an embodiment of the present invention, the first pressure relief port and/or the second pressure relief port is configured to be a hole or a slot. Of course, a pressure relief port having other shapes may also be provided.

It should be noted that although the telescopic portion according to the present invention is described by taking the foldable portion at the end portion of the top panel as an example, this is only an example. Any other manner capable of extending and driving the tether to move relative to the top panel may be used for the telescopic portion of the present utility. Moreover, the structure, fixing position, and manner of the tether are not limited to the contents described in the above embodiments, and the tether may have a uniform width, or the wide end of the tether may move relative to the top panel, or both the wide end and the narrow end of the tether may move relative to the top panel. Similarly, the movement of the tether causes the second pressure relief port of the tether and the first pressure relief port of the top panel to shift from mutually aligned positions to mutually staggered positions.

As described above, although the exemplary embodiments of the present invention have been described with reference to the accompanying drawings in the description, the present invention is not limited to the aforementioned specific embodiments, and the scope of protection of the present invention should be defined by the claims and equivalent meanings thereof.

## Claims

1. A safety airbag (1), configured to be mounted at the roof of a vehicle, comprising:
an airbag (10), having a deployed state and a stowed state; and
a gas generator, configured to inflate the airbag (10) to cause the airbag (10) to expand into the deployed state;
**characterized in that**:
the airbag (10) comprises a top panel (111) positioned at the roof of the vehicle in the deployed state, and the airbag (10) further comprises a tether (13) located on an inner side of the airbag, the tether (13) and the top panel (111) being abutted against each other,
the top panel (111) is provided with a first pressure relief port (113), the tether (13) is provided with a second pressure relief port (121), the first pressure relief port (113) and the second pressure relief port (121) are aligned with each other in a first time period during a deployment process of the airbag (10), and the first pressure relief port (113) and the second pressure relief port (121) are staggered with each other via a telescopic portion (111A) provided on the top panel (111) in a second time period during the deployment process of the airbag (10), wherein the second time period is later than the first time period.

2. The safety airbag (1) according to claim 1, wherein the telescopic portion (111A) is configured to be a foldable portion, and the foldable portion is formed by folding one section of the top panel (111), and extends into a flat section as the airbag (10) is gradually deployed.

3. The safety airbag (1) according to claim 2, wherein the foldable portion is provided at an end portion of the top panel (111), one end of the tether (13) is fixed to a first end of the foldable portion, and as the airbag (10) is gradually deployed, the first end of the foldable portion moves to increase the length of the top panel (111), and pulls the tether (13) to move toward the end portion of the top panel (111) along with the first end until the first pressure relief port (113) and the second pressure relief port (121) are staggered.

4. The safety airbag (1) according to claim 3, wherein the airbag (10) comprises a first chamber (11) and a second chamber (12) in fluid communication with each other, in the deployed state of the airbag (10), the first chamber (11) is deployed along the roof of the vehicle, and the second chamber (12) is positioned at the dashboard of the vehicle, and the gas generator is provided at the first chamber (11).

5. The safety airbag (1) according to claim 1, further comprising a closing portion (14) provided on an inner side surface of a partial section of the top panel (111) and spaced apart from the first pressure relief port (113) by a predetermined distance, wherein when the second pressure relief port (121) and the first pressure relief port (113) are staggered, the closing portion (14) covers the second pressure relief port (121).

6. The safety airbag (1) according to claim 2, wherein the foldable portion is formed by folding one section of the top panel (111) into a multi-layer structure, and the foldable portion comprises a fixing member for fixing the folded structure thereof.

7. The safety airbag (1) according to claim 6, wherein the foldable portion is formed by folding one section of the top panel (111) into a three-layer structure.

8. The safety airbag (1) according to claim 6, wherein the fixing member is configured to be a stitch.

9. The safety airbag (1) according to claim 5, wherein the tether (13) comprises a wide end (132) and a narrow end (131), the first pressure relief port (113) is provided at a position of the top panel (111) closer to the wide end (132) of the tether (13), and when the second pressure relief port (121) and the first pressure relief port (113) are staggered, the wide end (132) of the tether (13) covers the first pressure relief port (113).

10. The safety airbag (1) according to claim 1, wherein the first pressure relief port (113) and/or the second pressure relief port (121) is configured to be a hole or a slot.
